# EUROPÄISCHE PATENTSCHRIFT

(11) **EP 0 678 375 B1**
(45) Veröffentlichungstag und Bekanntmachung des Hinweises auf die Patenterteilung: **22.03.2000**
(21) Anmeldenummer: 95101190.7
(22) Anmeldetag: 28.01.1995
(51) Int. Cl.: B29D 30/46, B26D 7/01

(54) **Vorrichtung zum Schneiden von Einlagen enthaltenden Bandmaterialien**
Device for cutting web material containing embedded elements
Dispositif pour la coupe d'un matériau en bande contenant des éléments noyés dans la bande

(30) Priorität: 07.04.1994 DE 4411937
(43) Veröffentlichungstag der Anmeldung: 25.10.1995
(73) Patentinhaber: Karl Eugen Fischer GmbH Maschinenfabrik, D-96224 Burgkunstadt (DE)
(72) Erfinder: Holzmann, Heinrich, D-96272 Hochstadt a.M. (DE); Richter, Georg, D-96317 Kronach (DE)
(74) Vertreter: Matschkur, Lindner Blaumeier Patent- und Rechtsanwälte

(56) Entgegenhaltungen:
- EP-A- 0 061 171
- EP-A- 0 152 672
- DE-A- 3 608 194
- DE-B- 1 187 365
- DE-C- 283 413
- FR-A- 2 409 850
- FR-A- 2 443 409
- GB-A- 743 962
- US-A- 3 107 563
- US-A- 3 238 831
- US-A- 4 554 850
- US-A- 4 860 620

## Beschreibung

Die Erfindung bezieht sich auf eine Vorrichtung zur Kantentrimmung von Einlagen enthaltenden Bandmaterialien, insbesondere Nylon- oder Stahlcordbändern, durch Abtrennen eines Randbereiches des Bandmaterials, mit einer am Bandmaterial zwischen den in Bandlängsrichtung verlaufenden Einlagen angreifenden Schneideinrichtung die in einer quer zur Förderrichtung des an ihr vorbeigeförderten Bandmaterials an einem Rahmengestell beweglich gelagerten Aufnahme gehaltert ist, wobei die Seitenführung der Schneideinrichtung durch die im Bandmaterial eingebetteten Einlagen erfolgt und die beheizbar ausgebildete Schneideinrichtung in Abhängigkeit der diskontinuierlichen Bandbewegung mittels einer Hebe- und Senkeinrichtung von einer am Bandmaterial angreifenden Arbeitsstellung in eine vom Bandmaterial beabstandete Nichtarbeitsstellung bewegbar ist,

Eine derartige Vorrichtung mit den Merkmalen des Oberbegriffs des Patentanspruchs 1 ist der Anmelderin bekannt, aber ihres Wissens nicht durch eine vorveröffentlichte Druckschrift belegbar. Eine solche Vorrichtung mit einer beheizbar ausgebildeten Schneideinrichtung hat den Vorteil, daß der umliegende Bereich des Bandmaterials weich wird und daher das Bandmaterial einfacher als kaltes Material und damit auch mit einem gegebenenfalls stumpferen Schneidwerkzeug geschnitten werden kann. Darüber hinaus werden, da das Material im Bereich des Schneidwerkzeugs warm und weich und in weiter außen liegenden Bereichen kalt und hart ist, von diesen harten Materialbereichen zusätzliche Führungskräfte auf das Schneidwerkzeug ausgeübt, so daß die Führung im Einlagenkanal verbessert ist. Die Heb- und Senkeinrichtung der bekannten Vorrichtung trägt der Tatsache Rechnung, daß das zu schneidende Bandmaterial beim Kantentrimmen in der Regel - bedingt durch den nachfolgenden Verarbeitungsprozess - diskontinuierlich gefördert wird, so daß bei stehendem Band und daran angreifender heißer Schneideinrichtung der umliegende Bereich weiträumig überhitzt werden könnte, was ein unerwünschtes Anvulkanisieren eines relativ großen Bereichs zur Folge hätte. Dies wird durch die Hebe- und Senkeinrichtung verhindert, die eine Trennung der geheizten Schneideinrichtung vom Bandmaterial während eines Bandstillstandes bewirkt.

Dabei entsteht allerdings die Schwierigkeit, daß die ausgehobene Schneideinrichtung wieder genau in den vorherigen Schnitt eintauchen soll, wenn ein erneuter Bandtransport einsetzt, um eine exakt gerade getrimmte Kante zu erzielen. Dies ist noch dazu bei der bevorzugten pendelnden Aufhängung der Schneidvorrichtung, damit sie automatisch durch die Einlagen im Bandmaterial geführt wird, bei allen bislang geführten Anordnungen nicht zu erreichen. Diese Schwierigkeiten gelten auch für beheizbare Schneidvorrichtungen, wie sie in der DE 36 08 194 A1 und der Auslegeschrift 1 187 365 beschrieben sind. Die Schneidvorrichtungen dienen dabei nicht zum Kantentrimmen, so daß das periodische Unterbrechen des Transports und damit des Schnitts und die Probleme einer daraus resultierenden Überhitzung sich hierbei überhaupt nicht ergeben. Hier geht es um das Querdurchtrennen von Cordbandstreifen, das natürlich nach dem Ansetzen in einem Arbeitsgang durchgeführt wird.

Der Erfindung liegt daher die Aufgabe zugrunde, eine Vorrichtung zur Kantentrimmung der eingangs genannten Art so auszugestalten, daß die Schneideinrichtung beim Fortsetzung des Schnittes nach einem Materialstillstand und einem Ausheben der Schneideinrichtung an exakt derselben Stelle am Material wieder angreift bzw. in den Schnitt eintaucht.

Zur Lösung dieser Aufgabe ist erfindungsgemäß vorgesehen, daß der Schneideinrichtung eine Feststelleinrichtung zugeordnet ist, die als Platzhalter für die Schneideinrichtung am Bandmaterial und/oder in den angebrachten Schnitt eingreifen kann und die zwischen einer Lösestellung und einer am Bandmaterial eingreifenden Feststellstellung beweglich ist, wobei bei der Bewegung der Feststelleinrichtung von der Lösestellung in die Feststellstellung die in Arbeitsstellung befindliche Schneideinrichtung zur Führung der Feststelleinrichtung dient und umgekehrt die in Feststellstellung befindliche Feststelleinrichtung zur Führung der Schneideinrichtung bei der Bewegung von der Nichtarbeitsstellung in die Arbeitsstellung dient.

Als zweckmäßige Heizeinrichtung kann erfindungsgemäß eine elektrische Heizpatrone verwendet werden, die an der Aufnahme angeordnet ist und die Schneideinrichtung direkt oder indirekt erwärmt. Die Hebe- und Senkeinrichtung, die vorzugsweise an der Aufnahme oder oberhalb derselben angeordnet ist, kann erfindungsgemäß als pneumatischer oder hydraulischer Zug-Druck-Zylinder ausgebildet sein, wobei auch andere Einrichtungen möglich sind.

Durch die erfindungsgemäße Feststellvorrichtung, die nicht dazu dient, das Messer fest einzustellen, sondern es nur wieder sicher an seine ursprüngliche Schnittstelle zurückzubringen, die also im eigentlichen Sinn mehr eine Platzhaltereinrichtung ist, wird sowohl ein Verrutschen des gegebenenfalls unter geringer Spannung stehenden Bandmaterials, als auch im Falle der Drehpunkt-Lagerung der Schneideinrichtung ein Verschwenken der ausgelenkten Schneideinrichtung verhindert, was in beiden Fällen zu einem fehlerhaften Wiederansetzen und Weiterführen des Schnittes führen würde. Die Feststellvorrichtung kann erfindungsgemäß mittels einer vorzugsweise mit einer Fördereinrichtung des Bandmaterials in Verbindung stehenden Betätigungseinrichtung zwischen Ihren unterschiedlichen Stellungen geschaltet werden, so daß bei Bandförderung die Feststellvorrichtung in ihrer vom Bandmaterial ausgerückten Lösestellung verbleibt und erst bei stillstehender Fördereinrichtung und damit stillstehendem Band zugeschaltet und - von der in Eingriffstellung im Bandmaterial befindlichen Schneideinrichtung geführt - als Platzhalter in den Schnitt eintaucht.

Um das Heben und Senken der Schneideinrichtung und das Schalten der Feststelleinrichtung zwischen ihren Stellungen derart zeitlich koordinieren zu können, daß stets gewährleistet ist, daß wenigstens eine der beiden am Material angreift und die Schneidvorrichtung und das Band bzw. den Schnitt in der entsprechenden Lagebeziehung hält, kann in weiterer Ausgestaltung der Erfindung vorgesehen sein, daß die Hebe- und Senkeinrichtung mit einer Födereinrichtung des Bandmaterial und gegebenenfalls mit der Betäigungseinrichtung in Verbindung steht, so daß die entsprechenden Verstellbewegungen untereinander koordiniert sind.

Es hat sich als zweckmäßig erwiesen, wenn, wie erfindungsgemäß ferner vorgesehen sein kann, die Feststellvorrichtung und gegebenenfalls die Betätigungsvorrichtung in jeder von der Einlagenführung bewirkten Auslenklage mit der Schneideinrichtung fluchtend in Bandförderrichtung hinter der Schneideinrichtung angeordnet sind, so daß gewährleistet ist, daß die Feststellvorrichtung stets in der selben Lage bzw. Stellung bezüglich der Schneideinrichtung am Bandmaterial angreift. Dabei können die Aufnahme und die Feststellvorrichtung und gegebenenfalls die Betätigungseinrichtung für den Fall, daß die gesamte Trimmvorrichtung die erfindungsgemäße Ein-Punkt-Drehlagerung aufweist, zur entsprechenden Hebelverlängerung an einem gemeinsamen, am Rahmengestell beweglich gelagerten Vertikalträger angeordnet sind.

Als Feststellvorrichtung haben sich zwei gleichermaßen wirksame Alternativlösungen als zweckmäßig herausgestellt. Die eine Alternativlösung kann erfindungsgemäß eine an der Oberseite des Bandmaterials angreifende, zum seitlichen Umgreifen der Schneideinrichtung im wesentlichen U-förmig ausgebildete Klemmvorrichtung sein, die in ihrer Arbeitsstellung am Material oberseitig klemmend bzw. leicht andrückend und sowohl das Material als auch die Schneideinrichtung ihrer Lage fixierend angreift.

Demgegenüber kann die bevorzugte erfindungsgemäße Alternativlösung vorsehen, daß eine durch den am Bandmaterial eingebrachten Schnitt durchgreifende, zum seitlichen Umgreifen der Schneideinrichtung im wesentlichen U-förmig ausgebildete und im wesentlichen der Schnittbreite angepaßte Spreizeinrichtung, insbesondere ein Spreizblech angeordnet ist. Diese Spreizeinrichtung, die erfindungsgemäß in ihrem Vorderen, in den Schnitt einzuführenden Bereich spitz zulaufend ist, so daß der Eingriff erleichtert ist, greift im Gegensatz zur Klemmvorrichtung direkt in den Schnitt ein und spreizt diesen einen sicheren Wiedereingriff der Schneideinrichtung gewährleistend, leicht auf.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze der Drehpunkt-Schwenklagerung der Schneidvorrichtung,
- Fig. 2: eine drehpunktgelagerte Kantentrimmvorrichtung in Arbeitsstellung,
- Fig. 3: die Schneideinrichtung und die diese halternde Aufnahme der Vorrichtung aus Fig. 2,
- Fig. 4: die Vorrichtung aus Fig. 2 direkt nach dem Stoppen der Bandmaterialförderung, mit in Arbeitsstellung befindlicher Schneideinrichtung und Feststellvorrichtung,
- Fig. 5: die Vorrichtung aus Fig. 4 mit in Nichtarbeitsstellung befindlicher Schneideinrichtung und,
- Fig. 6: eine Aufsicht auf zu schneidendes Bandmaterial mit zwei parallel angeordneten Schneidvorrichtungen.

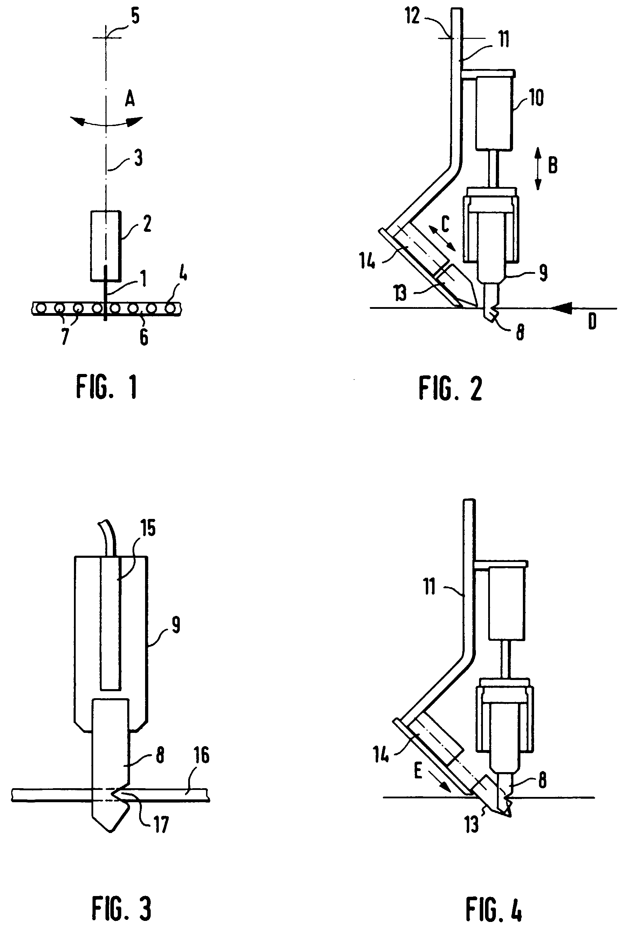

Fig. 1 zeigt schematisiert die Drehpunktlagerung der Schneidvorrichtung. Diese besteht im wesentlichen aus einer Schneideinrichtung 1 und einer diese halternden Aufnahme 2, die über einen hier lediglich strichpunktiert angedeuteten Vertikalträger 3 in einem von der Schneidebene 4 beabstandeten, Drehpunkt 5 schwenkgelagert ist, so daß der Vertikalkörper quasi einen Schwenkhebel bildet. Die auf beide Seiten mögliche Schwenkbarkeit ist durch den Doppelpfeil A angedeutet. Im in Fig. 1 gezeigten Beispiel greift die Schneideinrichtung 1 in ein Bandmaterial 6 im Bereich zwischen zwei Einlagen 7 ein. Die Einlagen 7 bewirken dabei die Führung der Schneideeinrichtung 1 in dem zwischen diesen gebildeten Kanal. Für den Fall, daß die Einlagen 7 nicht exakt parallel zur Schnittrichtung verlaufen, sondern von dieser abweichen, wirken, wenn die Schneideinrichtung 1 in einen derartigen fehllaufenden Bereich kommt, infolge ihrer Annäherung an eine der Fadeneinlagen 7 von dieser ausgehende Auslenkkräfte, die die gesamte Schneidvorrichtung um den Drehpunkt 5 in eine der möglichen Richtungen auslenken und verschwenken. Wird nun die Vorrichtung um einen bestimmten Winkel ausgelenkt, so wirken infolgedessen zu den Führungskräften entgegengesetzt gerichtete Rückstellkräfte auf die Vorrichtung, die diese wieder in die Nullage bringen wollen. Infolge der Beabstandung des Drehpunkts 5 von der Schneidebene 4, die die Länge des Drehhebels bestimmt, können bei entsprechender Hebellängenwahl diese Rückstellkräfte jedoch derart gering gehalten werden, daß sie kleiner sind als die ausgeübten Auslenkkräfte, so daß ein Durchtrennen der Einlage 7 infolge zu großer Rückstellkraft ausgeschlossen ist. Je länger der Hebelarm ist, um so geringer sind die Rückstellkräfte, was dazu führt, daß diese gegenüber den Auslenkkräften derart vernachläßigbar klein sind, daß ein merkliches Abweichen der Schnittlinie von der Idealschnittlinie, fast vollständig unterbleibt.

Fig. 2 zeigt in einer Seitenansicht den schematischen Aufbau einer erfindungsgemäßen Kantentrimmvorrichtung, die über eine Drehpunktlagerung an einem nicht gezeigtem Rahmengestell erfindungsgemäß gelagert ist. Die Trimmvorrichtung besteht aus einer Schneideinrichtung 8 in Form eines Vertikalschneidmessers, daß in einer Aufnahme 9 gehaltert ist. Die Aufnahme 9 ist mit einer als Zug-Druck-zylinder ausgebildeten Hebe- und Senkeinrichtung 10 verbunden, so daß sie in Richtung des Doppelpfeiles B auf und ab bewegbar ist. Diese gesamte Mimik ist an einem Vertikaiträger 11, der im Drehpunkt 12 am Rahmengestell befestigt ist, und der den bezüglich Fig. 1 beschriebenen Hebelarm bildet, angeordnet. Der Schneideinrichtung 8 zugeordnet ist eine Feststellvorrichtung 13, die über eine Betätigungseinrichtung 14 ebenfalls zwischen zwei Stellungen (Doppelpfeil C) bewegbar ist.

Wie aus Fig. 3 zu entnehmen ist, ist in der Aufnahme 9 eine Heizeinrichtung 15 in Form einer Heizpatrone angeordnet, welche im gezeigten Ausführungsbeispiel die indirekte Erwärmung der Schneideinrichtung 8 bewirkt. Durch diese Erwärmung wird gleichzeitig auch das zu schneidende Material des Bandes 16 erwärmt und damit weich, so daß es von dem kerbenförmig ausgebildeten Schneidbereich 17 der Schneideinrichtung 8 leichter als kaltes Material geschnitten werden kann.

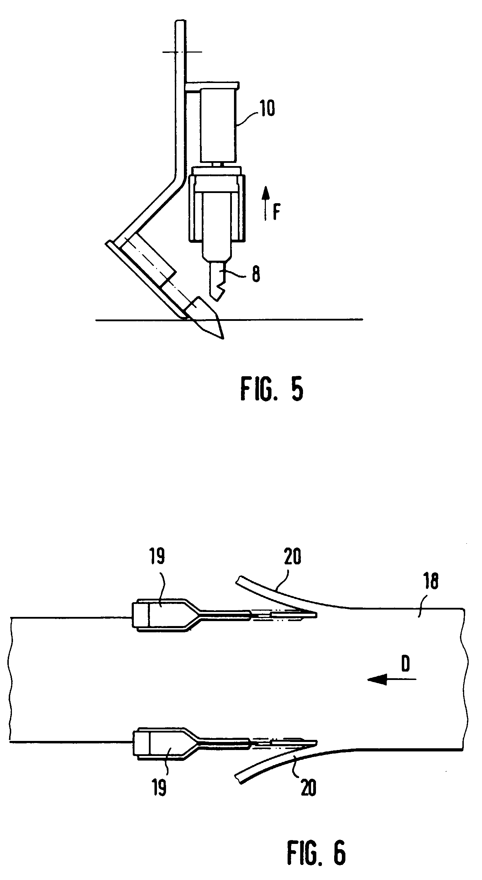

Der Arbeitsablauf bei diskontinuierlicher Bandförderung ist in den Figuren 2, 4 und 5 dargestellt. Bei kontinuierlicher Bandförderung, wie dies durch den Pfeil D in Fig. 2 dargestellt ist, ist die Schneideinrichtung 8 in ihrer abgesenkten Arbeitsstellung und trennt das kontinuierliche herangeförderte Bandmaterial. Wird das Bandmaterial bedingt durch eine nachgeschaltete Verarbeitungsvorrichtung angehalten, so wird zur Fixierung sowohl des Bandmaterial bzw. des angebrachten Schnitts als auch der Lagebeziehung der Schneidvorrichtung zum Bandmaterial bzw. dem Schnitt die Feststellvorrichtung 13, die im gezeigten Ausführungsbeispiel ein nach unten spitz zulaufendes Schneidblech ist, mittels der Betätigungseinrichtung 14 in ihre Feststellstellung (vergleiche Fig. 4) bewegt, (Pfeil E) in welche sie durch den Schnitt durchgreift und, infolge ihrer im wesentlichen U-förmigen klammerartigen Ausbildung, die heiße Schneideinrichtung 8 umgreift. Nach erfolgtem Eingriff des Schneidblechs 13 in den Schnitt kann dann die heiße Schneideinrichtung 8 mittels des Zug-Druck-Zylinders 10 aus dem Schnittbereich gezogen werden, (Pfeil F) so daß eine übermäßige Erwärmung des Schneidbereichs bei ruhendem Bandmaterial, was zu einer Vorvulkanisierung dieses Bereiches vor der eigentlichen Vulkanisierung führen würden, zweckmäßig verhindert wird. Wird die Bandförderung fortgesetzt, so läuft der in den Figuren 2, 4 und 5 beschriebene Feststellmechanismus rückwärts ab, d.h., die heiße Schneideinrichtung 8 wird abgesenkt und exakt an der selben Stelle wieder in den Schnitt eingeführt, wonach sofort das Spreizblech 13 aus dem Schnitt gezogen und in seine Lösestellung gebracht wird. Anschließend wird das Bandmaterial wieder weitergefördert, bis ein erneuter Stopp nötig ist, wonach der Feststellmechnismus erneut abläuft.

Fig. 6 zeigt nunmehr die Anordnung der bezüglich der Figuren 2 - 5 beschriebenen Schneidvorrichtung, wie sie beim Kantentrimmen von in Längsrichtung verlaufenden Einlagen aufweisenden Bandmaterialien erforderlich ist. Da am Bandmaterial 16 beide Kanten entsprechend zu trimmen und exakt und sauber zu schneiden sind, werden parallel zueinander zwei Trimmvorrichtungen 19 beispielsweise an einem diese übergreifenden Rahmengestell schwenkgelagert. Bei Förderung des Bandes 18 in Richtung des Pfeiles D werden sodann von den längslaufenden Einlagen geführt, die Randbereiche 20 abgetrennt, so daß das von der Trimmvorrichtung auslaufende Bandmaterial exakt die geforderten Maße aufweist.

## Patentansprüche

1. Vorrichtung zur Kantentrimmung von Einlagen enthaltenden Bandmaterialien (16), insbesondere Nylon- oder Stahlcordbändern, durch Abtrennen eines Randbereiches (20) des Bandmaterials (16), mit einer am Bandmaterial (16) zwischen den in Bandlängsrichtung verlaufenden Einlagen angreifenden Schneideinrichtung (8), die in einer quer zur Förderrichtung des an ihr vorbeigeförderten Bandmaterials (16) an einem Rahmengestell beweglich gelagerten Aufnahme gehaltert ist, wobei die Seitenführung der Schneideinrichtung (8) durch die im Bandmaterial (16) eingebetteten Einlagen (7) erfolgt und die beheizbar ausgebildete Schneideinrichtung (8) in Abhängigkeit der diskontinuierlichen Bandbewegung mittels einer Hebe- und Senkeinrichtung (10) von einer am Bandmaterial (16) angreifenden Arbeitsstellung in eine vom Bandmaterial (16) beabstandete Nichtarbeitsstellung bewegbar ist, dadurch gekennzeichnet, daß der Schneideinrichtung (8) eine Feststelleinrichtung (13) zugeordnet ist, die als Platzhalter für die Schneideinrichtung (8) am Bandmaterial (16) und/oder in den angebrachten Schnitt eingreifen kann und die zwischen einer Lösestellung und einer am Bandmaterial (16) eingreifenden Feststellstetlung beweglich ist, wobei bei der Bewegung der Feststelleinrichtung von der Lösestellung in die Feststellstellung die in Arbeitsstellung befindliche Schneideinrichtung zur Führung der Feststelleinrichtung dient und umgekehrt die in Feststellstellung befindliche Feststelleinrichtung zur Führung der Schneideinrichtung (8) bei der Bewegung von der Nichtarbeitsstellung in die Arbeitsstellung dient.

2. Vorrichtung nach Anspruch 1, gekennzeichnet durch eine vorzugsweise an der Aufnahme (9) angeordnete, die Schneideinrichtung (8) direkt oder indirekt erwärmende Heizeinrichtung (15), insbesondere eine elektrische Heizpatrone.

3. Vorrichtung nach Anspruch 1 oder 2, dadurch gekennzeichnet, daß die Hebe- und Senkeinrichtung (10) ein oberhalb der Aufnahme (9) angeordneter, vorzugsweise an der Aufnahme (9) angreifender, pneumatischer oder hydraulischer Zug-Druck-Zylinder ist.

4. Vorrichtung nach einem der Ansprüche 1 bis 3, dadurch gekennzeichnet, daß der Feststellvorrichtung (13) eine vorzugsweise mit einer Fördereinrichtung des Bandmaterials in Verbindung stehende Betätigungseinrichtung (14) zugeordnet ist.

5. Vorrichtung nach einem der Ansprüche 1 bis 4, dadurch gekennzeichnet, daß die Hebe- und Senkeinrichtung (10) mit einer Fördereinrichtung des Bandmaterials und gegegebenenfalls mit der Betätigungseinrichtung (14) in Verbindung steht.

6. Vorrichtung nach einem der Ansprüche 1 bis 5, dadurch gekennzeichnet, daß die Feststellvorrichtung (13) und gegebenenfalls die Betätigungsvorrichtung (14) in jeder von der Einlagenführung bewirkten Auslenklage mit der Schneideinrichtung (8) fluchtend in Bandförderrichtung hinter der Schneideinrichtung (8) angeordnet ist.

7. Vorrichtung nach Anspruch 6, dadurch gekennzeichnet, daß die Aufnahme und die Feststelleinrichtung (13) und gegebenenfalls die Betätigungseinrichtung (14) an einem gemeinsamen, am Rahmengestell beweglich gelageilen Vertikalträger (11) angeordnet sind.

8. Vorrichtung nach einem der Ansprüche 1 bis 7, dadurch gekennzeichnet, daß die Feststellvorrichtung (13) eine an der Oberseite des Bandmaterials angreifende, zum seitlichen Umgreifen der Schneideinrichtung (8) im wesentlichen U-förmig ausgebildete Klemmvorrichtung ist.

9. Vorrichtung nach einem der Ansprüche 1 bis 7, dadurch gekennzeichnet, daß die Feststellvorrichtung (13) eine durch den am Bandmaterial angebrachten Schnitt durchgreifende, zum seitlichen Umgreifen der Schneideinrichtung (8) im wesentlichen U-förmig ausgebildete und im wesentlichen der Schnittbreite angepaßte Spreizeinrichtung, insbesondere ein Spreizblech, ist.

10. Vorrichtung nach Anspruch 9, dadurch gekennzeichnet, daß die Spreizeinrichtung (13) in ihrem vorderen, in den Schnitt einzuführenden Bereich spitz zulaufend ausgebildet ist.

11. Vorrichtung nach einem der Ansprüche 1 bis 10, dadurch gekennzeichnet, daß die Schneideinrichtung (8) kreisförmige Schneid- und Quetschscheiben und vertikal stehende Schneidmesser umfaßt.

## Claims

1. Device for trimming the edges of web materials (16), in particular nylon or steel corded strips, containing embedded elements by separating an edge region (20) of the web material (16), with a cutter (8) which acts on the web material (16) between the embedded elements extending in the web longitudinal direction and which is mounted in a seat mounted movably on a frame stand transverse to the conveying direction of the web material (16) conveyed past, wherein the lateral guiding of the cutter (8) is effected by the elements (7) embedded in the web material (16) and the heatable cutter (8) is movable in accordance with the discontinuous web movement by means of a lifting and lowering device (10) from a working position acting on the web material (16) into a non-working position spaced from the web material (16), characterised in that the cutter (8) is allocated a fixing device (13), which can engage as a place-keeper for the cutter (8) on the web material (16) and/or in the cut formed and which is movable between a release position and a fixing position engaging on the web material (16), wherein upon movement of the fixing device from the release position into the fixing position, the cutter in the working position acts to guide the fixing device and conversely the fixing device in the fixing position acts to guide the cutter (8) upon movement from the non-working position into the working position.

2. Device according to claim 1, characterised by a heating device (15), in particular an electric heating cartridge, which is preferably disposed on the seat (9) and which heats the cutter (8) directly or indirectly.

3. Device according to claim 1 or 2, characterised in that the lifting and lowering device (10) is a pneumatic or hydraulic compression-tension cylinder disposed above the seat (9) and preferably acting on the seat (9).

4. Device according to one of claims 1 to 3, characterised in that the fixing device (13) is allocated an actuator (14) preferably communicating with a conveyor of the web material.

5. Device according to one of claims 1 to 4, characterised in that the lifting and lowering device (10) communicates with a conveyor of the web material and optionally with the actuator (14).

6. Device according to one of claims 1 to 5, characterised in that the fixing device (13) and optionally the actuator (14) in any excursive position effected by the embedded element guiding is disposed flush with the cutter (8) behind the cutter (8) in the web conveying direction.

7. Device according to claim 6, characterised in that the seat and the fixing device (13) and optionally the actuator (14) are disposed on a common vertical support (11) mounted movably on the frame stand

8. Device according to one of claims 1 to 7, characterised in that the fixing device (13) is a substantially U-shaped clamping device acting on the upper face of the web material for lateral encompassing of the cutter (8).

9. Device according to one of claims 1 to 7, characterised in that the fixing device (13) is a spreading device, in particular spreading plate, which engages through the cut made in the web material, is substantially U-shaped for lateral encompassing of the cutter (8), and is substantially adapted to the cut width.

10. Device according to claim 9, characterised in that the spreading device (13) converges to a point in its front region to be inserted into the cut.

11. Device according to one of claims 1 to 10, characterised in that the cutter (8) comprises circular cutting and crushing discs and vertical cutting blades.

## Revendications

1. Dispositif pour égaliser les bords de matériaux en bande (16) renfermant des éléments incorporés, en particulier de bandes à armature en fils de Nylon ou en fils métalliques, par détachement d'une partie marginale (20) du matériau en bande (16), comportant un instrument de découpage (8) qui mord dans le matériau en bande (16), entre les éléments incorporés s'étendant dans la direction longitudinale de la bande, et qui est supporté dans une monture montée mobile sur un bâti, dans une direction transversale à la direction d'avance du matériau en bande (16) avancé devant lui, le guidage latéral de l'instrument de découpage (8) étant alors réalisé par les éléments incorporés (7) noyés dans le matériau en bande (16) et l'instrument de découpage (8), conçu chauffant, pouvant, en fonction du déplacement intermittent de la bande, être déplacé d'une position de travail, mordant dans le matériau en bande (16), jusque dans une position de repos écartée du matériau en bande (16), au moyen d'un dispositif de relèvement et d'abaissement (10), caractérisé en ce qu'à l'instrument de découpage (8) est associé un dispositif d'immobilisation (13) qui peut venir en prise sur le matériau en bande (16) et/ou dans l'entaille de découpage pratiquée, en jouant le rôle d'un repère de position pour l'instrument de découpage (8), et qui est déplaçable entre une position de relâchement et une position d'immobilisation le mettant en prise avec le matériau en bande (16), étant précisé que lors du déplacement du dispositif d'immobilisation de la position de relâchement dans la position d'immobilisation, l'instrument de découpage se trouvant en position de travail sert à guider le dispositif d'immobilisation et, inversement le dispositif d'immobilisation se trouvant en position d'immobilisation sert à guider l'instrument de découpage (8) lors du déplacement de la position de repos dans la position de travail.

2. Dispositif selon la revendication 1, caractérisé par un dispositif de chauffage (15), en particulier une cartouche chauffante électrique, situé de préférence sur la monture (9) et chauffant directement ou indirectement l'instrument de découpage (8).

3. Dispositif selon la revendication 1 ou 2, caractérisé en ce que le dispositif de relèvement et d'abaissement (10) est un vérin de traction et de poussée, pneumatique ou hydraulique, disposé au-dessus de la monture (9) et agissant, de préférence, sur la monture (9).

4. Dispositif selon l'une des revendications 1 à 3, caractérisé en ce qu'au dispositif d'immobilisation (13) est associé un dispositif d'actionnement (14), de préférence rattaché à un dispositif d'avance du matériau en bande.

5. Dispositif selon l'une des revendications 1 à 4, caractérisé en ce que le dispositif de relèvement et d'abaissement (10) est rattaché à un dispositif d'avance du matériau en bande et, le cas échéant, au dispositif d'actionnement (14).

6. Dispositif selon l'une des revendications 1 à 5, caractérisé en ce que le dispositif d'immobilisation (13) et, le cas échéant, le dispositif d'actionnement (14) sont, dans chaque situation de déviation que cause le guidage par les éléments incorporés, disposés en aval de l'instrument de découpage (8) dans la direction d'avance de la bande, alignés avec l'instrument de découpage (8).

7. Dispositif selon la revendication 6, caractérisé en ce que la monture et le dispositif d'immobilisation (13) ainsi que, le cas échéant, le dispositif d'actionnement (14) sont disposés sur un support vertical commun (11), monté mobile sur le bâti.

8. Dispositif selon l'une des revendications 1 à 7, caractérisé en ce que le dispositif d'immobilisation (13) est un dispositif de serrage mordant dans la face supérieure du matériau en bande et ayant une configuration sensiblement en forme de U pour enserrer latéralement l'instrument de découpage (8).

9. Dispositif selon l'une des revendications 1 à 7, caractérisé en ce que le dispositif d'immobilisation (13) est un écarteur, en particulier une tôle d'écartement, qui pénètre à travers l'entaille de découpage pratiquée sur le matériau en bande, présente une configuration sensiblement en forme de U pour enserrer latéralement l'instrument de découpage (8) et est sensiblement adapté à la largeur de l'entaille de découpage.

10. Dispositif selon la revendication 9, caractérisé en ce que l'écarteur (13), dans sa partie avant destinée à s'introduire dans l'entaille de découpage, se termine en pointe.

11. Dispositif selon l'une des revendications 1 à 10, caractérisé en ce que l'instrument de découpage (8) comprend des disques circulaires de découpage et de pincement et des lames de coupe se tenant verticalement.
